# EUROPEAN PATENT APPLICATION

(11) **EP 2 233 804 A1**
(43) Date of publication of application: **29.09.2010**
(21) Application number: 10250116.0
(22) Date of filing: 25.01.2010
(51) Int. Cl.: F16K 1/22, F16K 15/03

(54) **Butterfly valve combined with check valve**

(30) Priority: 23.03.2009 US 408970
(71) Applicant: Hamilton Sundstrand Corporation, Windsor Locks, CT 06096-1010 (US)
(72) Inventor: Stredel, Adam, Agawam, Massachusetts 01001 (US)
(74) Representative: Tomlinson, Kerry John

(57) **Abstract**

A combination valve (18) comprises a butterfly valve (22) mounted to pivot within a valve housing (21), and to control the area of a flow path within the valve housing. The butterfly valve is provided with an actuator (20) to pivot the valve. A check valve (28) is mounted at an outlet end (31) of the valve housing.

## Description

### BACKGROUND OF THE INVENTION

This application relates to a check valve combined with a butterfly valve.

Valves are utilized in various fluid flow situations. One common type of valve is a so-called butterfly valve. A butterfly valve includes a disk which can pivot within a housing to limit the cross-sectional area of a flow path, and thus control the volume of fluid that passes through the butterfly valve. Applications include an engine bleed system, or auxiliary power unit bleed systems, as examples.

In many applications, a check valve must be mounted downstream of the butterfly valve to prevent back flow.

To date, the two valves have typically been provided as two separate valve elements having two entirely separate housings.

### SUMMARY OF THE INVENTION

A combination valve comprises a butterfly valve mounted to pivot within a valve housing, and to control the area of a flow path within the valve housing. The butterfly valve is provided with an actuator to pivot the valve. A check valve is mounted at an outlet end of the valve housing.

These and other features of the present invention can be best understood from the following specification and drawings, the following of which is a brief description.

### BRIEF DESCRIPTION OF THE DRAWINGS

Figure 1 is a cross-sectional view through the inventive valve.
Figure 2 is a perspective view of the inventive valve.

### DETAILED DESCRIPTION OF THE PREFERRED EMBODIMENT

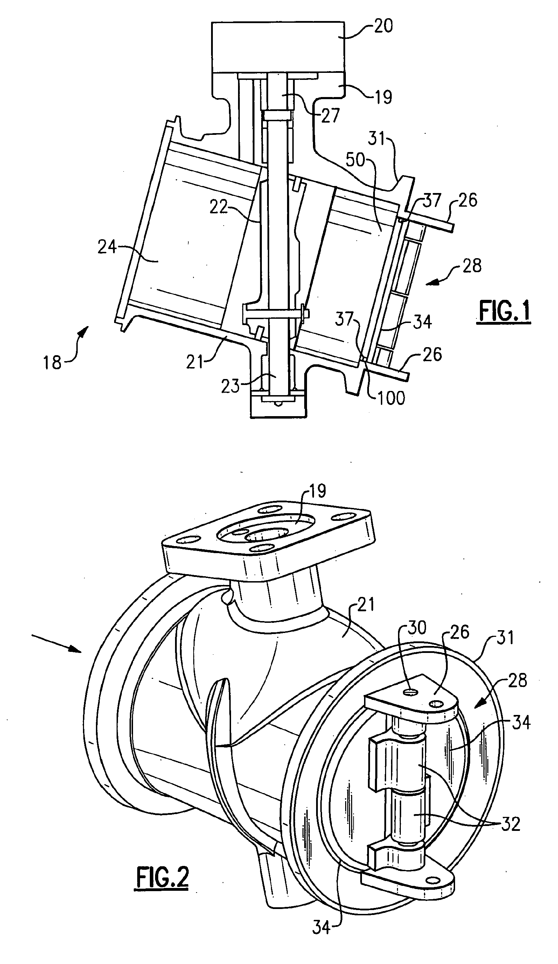

A combination butterfly and check valve 18 is illustrated in Figure 1. An actuator 20 is mounted on an actuator mount 19, and drives a shaft 27 to pivot a butterfly valve 22. As known, a butterfly valve typically includes a circular disk which pivots within a flow path 24 to change the cross-sectional area of the flow path, and hence the volume of fluid passing through the flow path. A pinion 23 mounts the butterfly valve within the housing at an opposed end from the actuator 20.

Ears 26 are formed on a housing 21 of the butterfly valve. A check valve 28 is mounted on an outlet end 31 of the housing 21, and within the ears 26. As best shown in Figure 2, the ears 26 include an opening which receives a pivot pin 30. The check valve is formed of two flap members 34 each having hinge knuckles 32 mounted on the pin 30. The use of the two flaps requires a smaller load, and less space to open the valve. When fluid is flowing in the desired direction through the outlet end 31, the check valve flapper portion 34 can open to allow the flow. However, back flow will force the flapper portions 34 back against a surface 37 of the housing 21, preventing such back flow.

As can be appreciated from Figure 2, the ears 26 mount the pin 30 at a central portion of an outlet port at outlet end 31.

The actuator 20 may be an electric motor, or may be a fluid actuator of some sort. Control of the butterfly valve may be as known in the art, and the actuator will change the position of the butterfly valve 22 to achieve a desired flow through the path 24 and to the outlet port 50.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A combination (18) valve comprising:
a butterfly valve (22) mounted to pivot within a valve housing (21), and to control the area of a flow path within said valve housing, said butterfly valve being drivable to pivot by an actuator (20); and
a check valve (28) mounted at an outlet end (31) of said valve housing.

2. The combination valve as set forth in claim 1, wherein said check valve (28) is a flapper valve that includes at least one valve member (34) pivoting on a pin (30).

3. The combination valve as set forth in claim 2, wherein the pin (30) is mounted at a central location across an outlet flow opening (50).

4. The combination valve as recited in claim 2 or 3, wherein there are two flapper valve portions (34) pivotally mounted on said pin.

5. The combination valve as set forth in claim 2, 3 or 4, wherein said pin (30) is mounted in ears (26) that extend in an outward direction from said outlet end (31) of said housing.
